(19) **Europäisches Patentamt European Patent Office Office européen des brevets**

(11) **EP 2 240 904 B1**

(12) **EUROPEAN PATENT SPECIFICATION**

(45) Date of publication and mention
of the grant of the patent:
**25.04.2012 Bulletin 2012/17**

(51) Int Cl.:
*G06T 7/00* (2006.01)    *G06T 7/60* (2006.01)

(21) Application number: **09709737.2**

(22) Date of filing: **12.02.2009**

(86) International application number:
**PCT/EP2009/051626**

(87) International publication number:
**WO 2009/101128 (20.08.2009 Gazette 2009/34)**

(54) **DERIVING A QUANTITATIVE MEASURE OF THE INSTABILITY OF CALCIFIC DEPOSITS OF A BLOOD VESSEL**

ERMITTELN EINES QUANTITATIVEN MASSES DER INSTABILITÄT VON KALKABLAGERUNGEN EINES BLUTGEFÄSSES

OBTENTION D'UNE MESURE QUANTITATIVE DE L'INSTABILITÉ DE DÉPÔTS CALCIQUES D'UN VAISSEAU SANGUIN

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **13.02.2008 US 69894**

(43) Date of publication of application:
**20.10.2010 Bulletin 2010/42**

(73) Proprietor: **Synarc Inc.**
**Newark CA 94560 (US)**

(72) Inventors:
• **NIELSEN, Mads**
  **DK-2791 Dragør (DK)**
• **LAUZE, Francois B.**
  **DK-2720 Vanløse (DK)**
• **DE BRUIJNE, Marleen**
  **DK-1171 Copenhagen (DK)**
• **DAM, Erik B.**
  **DK-2200 Copenhagen (DK)**
• **KARSDAL, Morten A.**
  **DK-2100 Copenhagen (DK)**
• **CHRISTIANSEN, Claus**
  **CH-6922 Morcote (CH)**

(74) Representative: **Smart, Peter John et al**
**Beck Greener**
**Fulwood House**
**12 Fulwood Place**
**London**
**WC1V 6HR (GB)**

(56) References cited:
**US-A1- 2003 215 120    US-A1- 2006 280 350**

• **ANGULO, J. ET AL: "Morphological quantification of aortic calcification from low magnification images" IMAGE ANAL STEREOL, vol. 22, 2003, pages 81-89, XP007908015**
• **JAYALATH ET AL: "Aortic Calcification" EUROPEAN JOURNAL OF VASCULAR AND ENDOVASCULAR SURGERY, SAUNDERS, LONDON, GB, vol. 30, no. 5, 1 November 2005 (2005-11-01), pages 476-488, XP005156589 ISSN: 1078-5884**
• **NOZYNSKI J ET AL: "Mathematical Analysis of Calcifications in Stented, Antibiotic Sterilized and Cryopreserved Sheep Biological Valves Implanted for one Year in Triuspid Position" ANNALS OF TRANSPLANTATION, POLISH TRANSPLANTOLOGICAL FOUNDATION, WARSAW, PL, vol. 8, no. 1, 1 January 2003 (2003-01-01), pages 55-69, XP007908009 ISSN: 1425-9524**
• **SORANTIN ET AL: "Computer Aided Diagnosis of Clustered Microcalcifications Using Artificial Neural Nets" JOURNAL OF COMPUTING AND INFORMATION TECHNOLOGY - CIT, vol. 8, no. 2, 2000, pages 151-160, XP007908014**

## Description

The present invention relates to a method of deriving a quantitative measure of the instability of calcific deposits of a blood vessel.

Cardiovascular disease (CVD) is at present the most common cause of death in the developed world and almost one million deaths are caused by CVD annually. Despite vast epidemiologic and interventional studies that demonstrate significant declines in CVD incidence and prevalence with adherence to a healthy lifestyle and identification and treatment of risk factors, CVD mortality remains significant. Two thirds of women who die suddenly of CVD have no previously recognised symptoms.

An overwhelming range of potential risk factors for assessing CVD risk have already been identified. It is therefore unlikely that identification of additional independent risk factors will adequately identify patients at risk, because the more dominant factors are likely to have already been identified. For this reason, several multivariate analysis models have been suggested for estimation of risk in populations. For example, the SCORE (Systemic Coronary Risk Evaluation) system has been devised to provide a standard method of assessing risk of CVD. This system has been developed to define the lifestyle, risk factor and therapeutic targets for CVD prevention.

However, the SCORE system and other similar systems that have been devised all rely on the collection of a number of independent variables associated with a person, for example, age, sex, smoking habits, weight, height etc, that are then computed to assess risk of CVD. These methods do not involve considering the physical state of the cardiovascular system itself.

Since all major risk factors appear to have been identified, the focus has shifted to further understanding, analysis, automation and simplification of the dominant risk factors. Currently a large amount of interest relating to aortic calcifications has been devoted to findings relating to heritage, coronary calcifications, clinical vascular disease, cholesterol, and depression. Various studies have shown a correlation between aortic and coronary calcium. In type II diabetes patients, it has been shown that aortic calcification is an independent risk factor of clinical vascular disease. From all of these studies, it is clear that aortic calcification is an important factor of cardiovascular disease.

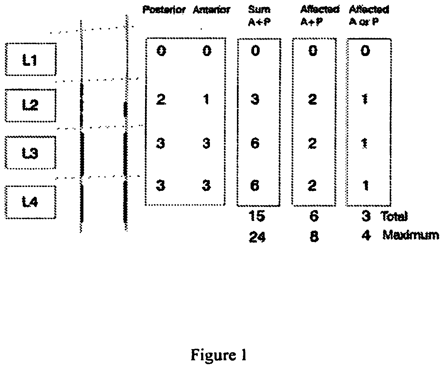

Kauppila et al. (Kauppila, Polak, Cupples, Hannan, Kiel, Wilson "New indices to classify location, severity and progression of calcific lesions in the abdominal aorta: a 25-year follow-up study") describes a segment-wise scoring system to determine the extent of calcification of an aorta. The most common of their scoring systems is referred to as the aortic calcification severity scoring system "AC24". For purposes of the AC24 scoring system, a lumbar radiograph image of an artery is split into eight segments according to the position of the four lumbar vertebrae, L1 to L4, and the anterior and posterior wall as shown in Figure 1. Each segment is given a value of 0 to 3, according to the quantity of calcium visible in that segment. Specifically, 0 implies no aortic calcific deposits; 1 - small scattered calcific deposits filling less than 1/3 of the longitudinal wall of the aorta; 2 - 1/3 or more, but less than 2/3 of the longitudinal wall of the aorta are calcified; 3 - 2/3 or more of the longitudinal wall is calcified. For the AC24 score the scores of the individual areas for both the posterior and anterior wall are summed.

The AC24 scoring system purports to provide a simple, low cost assessment of subclinical vascular disease. The division into segments has several advantages as the segmentation approach will only produce a large score when the calcified plaque is distributed over the full lumbar aorta. However, the method is still heavily reliant on the observations of a clinician when grading the different segments of the aorta. Furthermore, the method does not discriminate between severity and spread of individual calcifications. In this respect, a similar score may be returned in the situation where either one segment is severely calcified or several segments are slightly calcified.

The present invention is defined by the appended claims.

The present inventors have found that, in biological terms, a greater number of small calcific deposits distributed over a large portion of a blood vessel indicate a greater risk of developing cardiovascular disease than fewer larger deposits over the same area. The inventors have also found that the risk that a patient may suffer an episode of cardiovascular disease is high while calcific deposits are growing as during growth, the calcific deposits are relatively unstable. Because of its size relative to the size of a blood vessel a big, dense calcific deposit might be thought to be of grave concern, but could be quite stable and safe in terms of resulting in an episode of cardiovascular disease. By contrast, several small calcific deposits might seem not to be severe because of their size, but may carry a greater risk of resulting in an episode of cardiovascular disease as they would be associated with a greater risk of growth. The scope for growth of individual calcifications also increases as the periphery of a calcification becomes more irregular and deviates from being round.

By way of the method defined above, the present inventors take into consideration one or both of the spread of calcific deposits in a blood vessel and the scope of growth of the deposits to provide an indication of how stable the calcifications are.

This contrasts with the AC24 system in which an equal score may be returned for a given number of equi-sized calcifications irrespective of whether or not they are adjacent one another or spread along the aorta and in which no account is taken of the shape of the deposits.

In a preferred embodiment, locating and annotating the one or more calcific deposits comprises locating and annotating the boundary of each said calcific deposit and calculating a measure reflecting a combination of a) and b) is obtained by calculating the area occupied by the calcific deposits, expanding the boundary of each said calcific deposit outwards by a distance x corresponding to between 4mm and 20mm of a life-size image, calculating the area occupied by the expanded calcific deposits, and calculating a comparative index by comparing the area of expanded calcific deposits with the area of unexpanded calcific deposits to derive said measure.

Expanding the boundaries of calcific deposits in the blood vessel gives an indication of how the individual calcific deposits may grow. In this respect, expansion of the boundaries of the calcific deposits can portray molecular action that precedes the formation of calcific deposits but that is unseen in an image of a blood vessel. By expanding the boundaries of the individual calcifications by a fixed. distance, any calcific deposits that lie within close proximity and at least within the fixed distance of each other will expand into each other. When calculating the measure, overlapping areas of adjacent expanded calcific deposits will only be considered once. Thus, the measure is able to reflect how, in reality, the calcific deposits may grow.

Preferably, the method further comprises counting the number of calcific deposits and weighting said comparative index by said number. Weighting the number of calcifications with the comparison between the area of expanded calcific deposits and the area of unexpanded calcific deposits provides an enhanced measure of the degree of calcification in a blood vessel and the associated risk of developing cardiovascular disease.

Preferably, the distance x of expansion of the boundaries corresponds to between 7mm and 10mm of a life-size image. More preferably, the distance x corresponds to approximately 8.9mm of a life-size image.

The typical diameter of a healthy aorta is approximately 20mm-25mm. The typical diameter of a diseased aorta may be up to 60mm-65mm. In an embodiment, boundaries of the calcifications are expanded by approximately $\frac{1}{6}$ to $\frac{1}{2}$ of the diameter of the aorta.

Preferably, the step of expanding the boundary of the one or more calcific deposits comprises dilating the boundary of each calcific deposit.

In embodiments, the boundaries of the calcific deposits may be dilated using any suitable structuring element resulting in expansion of the boundaries by the approximate distance x.

For example, the boundaries of the one or more calcific deposits may be dilated using a square of side length 2x. In a preferred embodiment, the boundaries of the one or more calcific deposits are dilated using a circle of radius x.

In an embodiment, points along the boundary of each respective calcific deposit are moved outwards by the fixed distance x or, if closer, up to an aortic wall or unexpanded boundary of an adjacent calcific deposit. Preventing expansion of the boundaries of respective areas of calcification beyond either the arterial walls or adjacent calcific deposits gives a realistic prediction of the likely growth of the calcific deposits.

Additionally and/or alternatively, the method for calculating a measure reflecting b) comprises identifying a convex hull of the calcific deposits and deriving a value representative of the convex hull by calculating one of the perimeter of the convex hull and the area within the convex hull.

The convex hull of the calcific deposits defines the shortest path around the calcific deposits that encloses each of the calcific deposits. The convex hull increases as the calcific deposits are more spread out throughout the blood vessel.

Preferably, the method further comprises calculating a value indicative of the total area of the calcific deposits and dividing the value representative of the convex hull by the total area.

Alternatively and/or additionally, the method further comprises counting the number of calcific deposits and deriving a value indicative of the product obtained by multiplying the number of calcific deposits with the value representative of the convex hull.

In an alternative embodiment, the method for calculating a measure reflecting a) comprises identifying a convex hull of each individual calcific deposit, deriving a value representative of each convex hull by calculating one of the perimeter of the convex hull and the area within the convex hull, summing the values representative of the convex hulls, calculating a value indicative of the total area of the calcific deposits and dividing the sum of values representative of the convex hulls by the total area of calcific deposits.

In an embodiment, calculating a measure reflecting a) comprises deriving a value indicative of the result of calculating the ratio of the square of the perimeter to the area for each calcific deposit and summing the ratios.

In an alternative embodiment, calculating a measure reflecting a) comprises deriving a value indicative of the result of calculating the ratio of the square of the sum of the perimeters of the calcific deposits to the sum of the areas of the calcific deposits.

As stated above, the present inventors have found that the rate of growth of individual calcifications is likely to increase as the periphery of the individual calcific deposits become more irregular and as the individual calcific deposits deviate from being round. As the calcific deposits deviate from being round and as the periphery becomes more irregular the ratio of perimeter to area increases.

Additionally and/or alternatively, calculating a measure reflecting a) or b) further comprises calculating a value indicative of a fractal dimension of the calcific deposits.

Preferably, the method further comprises calculating the Hausdorff Dimension or using a box-counting method to calculate the value indicative of the fractal dimension.

At coarser resolutions of grid when using the box-counting method, an indication of the spread of calcific deposits within an aorta is determined as the fractal dimension will increase as the calcific deposits are more spread out. If the grid is relatively large, a greater percentage of boxes of the grid will be occupied by at least some part of a calcific deposit if the calcific deposits are spread out.

At finer resolutions of grid when using the box-counting method, an indication of the irregularity of the periphery of individual calcifications can be determined and the fractal dimension will increase as the periphery of calcific deposits become more irregular. If the grid is relatively fine, a greater percentage of boxes of the grid will be occupied by at least some part of a calcific deposit if the periphery of the calcific deposit is irregular.

Additionally and/or alternatively, calculating a measure reflecting b) further comprises calculating a value indicative of the entropy of the calcific deposits.

If all calcific deposits are located in close proximity to one another, the entropy of the calcific deposits will return a lower score than if the calcific deposits are spread out throughout the blood vessel.

Alternatively and/or additionally, calculating a measure reflecting b) further comprises calculating a value indicative of the sum of the distances between calcific deposits.

Whilst the invention is applicable to any blood vessel, in a preferred embodiment the blood vessel is an artery and in a more preferred embodiment the blood vessel is an aorta.

In the above embodiments, a high score generally indicates a lack of stability of the calcifications and indicates a higher risk that a patient may suffer an episode of cardiovascular disease. It will, however, be appreciated that an inverse of the measure could be obtained, or other known mathematical techniques could be applied to the measure, such that a lower score would indicate a lack of stability.

Although the invention has principally been defined as a method of extracting significant information from a digital image, it is of course equally applicable as an instruction set for a computer for carrying out a said method or as a suitably programmed computer.

Embodiments of the present invention will hereinafter be described with reference to the accompanying drawings, in which:

Figure 1 shows schematically a prior art scoring system for lumbar aortic calcification;

Figure 2 shows an x-ray of a lumbar aorta with calcific deposits in the lower region;

Figure 3 shows the x-ray of the lumbar aorta of Figure 2 where the aorta and boundaries of the respective calcific deposits in the aorta have been annotated;

Figure 4 shows an image of an aorta with the boundaries of the respective calcific deposits expanded in accordance with an example of an embodiment of the present invention;

Figure 5 illustrates schematically dilation of a shape;

Figure 6 shows the odds ratio of death versus survival using different techniques. Odds ratios are given for CVD/cancer death versus survival for patients in top 10% risk versus remaining patients. Significance of difference is indicated as * for p<0.05, ** for p<0.01, *** for p<0.001 using likelihood ratio of appropriately combined logistic regression models.

Figure 7 shows examples of scores for the AC24 and MACD index according to the size and distribution of the aortic calcifications, showing that only MACD is influenced by both size and distribution of the lesions; and

Figure 8 shows the study population and the subpopulations used in a study of the methods of the invention.

The present invention will hereinafter be described with particular reference to the analysis of x-ray images of an aorta. It will, however, be appreciated that the described method could be applied to other medical images of an aorta for example, DXA, Computer Tomography (CT) or Magnetic Resonance. Furthermore, the invention is not limited to analysis of images of an aorta and may also be applied to other blood vessels.

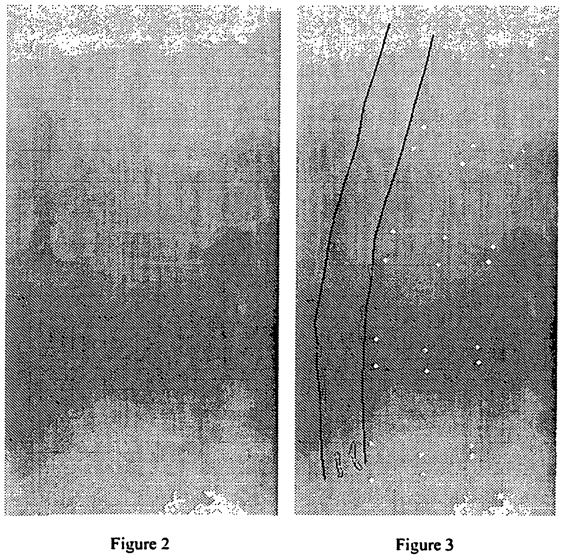

The first step in preparing the image for analysis is to outline the walls of the lumbar aorta in an image. Figure 2 shows an image of part of a lumbar spine and lumbar aorta where there are calcific deposits 4 in the lumbar aorta. The six points for vertebral height measurements are annotated on L1 to L4 of the lumbar vertebrae as shown in Figure 3 and from this the lumbar aorta can be identified and annotated. Further information about how the outline of the aorta is found is given by Lauze F et al. in ("Towards automated detection and segmentation of aortic calcifications from radiographs; proc of SPIE medical imaging 2007; 6512) and Conrad-Hansen et al. in ("Quantifying calcification in the lumbar aorta on x-ray images" in N. Ayache, S. Ourselin, and A. Maeder, editors; Medical Image Computing & Computer-Assisted Intervention; volume 4792 of Lecture Notes in Computer Science, pages 352-359, Springer, 2007).

The second step is to outline each individual calcific deposit located in the aorta. Annotation of the boundaries may be done manually or using a particle filtering technique as discussed by de Bruijne in ("Shape particle guided tissue classification" in Mathematical Methods in Biomedical Image Analysis (MMBIA), 2006) and Conrad-Hansen et al. in ("A pixelwise inpainting-based refinement scheme for quantizing calcification in the lumbar aorta on 2D lateral x-ray images", SPIE Medical Imaging - Image Processing, 2006).

Based on the annotations of the calcific deposits, the following severity scores relating to the geometrical outline of the calcific deposits and aorta may be computed. In addition, using these annotations known calcification severity scores, for example the AC24, can also be calculated.

**Area fraction (Area %)** - the percentile of area of the projected lumbar (L1-L4) aorta covered by calcific deposits. Area percentage may relate to the surface area of the interface between the plaque and the lumen, giving more weight to the central part of the aorta, and this may indirectly relate to the risk of rupture.

**Wall deposit thickness percentile (Thickness %)** - the average thickness of calcific deposits along the aorta wall in relation to the aorta width. The width of the plaques located in the aorta may relate to the hydrodynamic resistance in the aorta and thereby to blood pressure known to be among the dominant risk factors for CVD.

**Wall fraction (Wall%)** - the percentile of lumbar (L1-L4) aorta wall covered by calcific deposits.

**Length fraction (Length%) -** the fraction of the length of the aorta where a calcific deposit is present at any position (anterior, posterior or internal). The length fraction of the lumbar aortic wall covered by arteriosclerosis may relate to the surface area of the interface between the plaque and the lumen, and thereby indirectly to the risk of rupture.

**Number of calcific deposits (NCD) -** the number of distinct calcific deposits in the lumbar region (L1-L4). The number of calcific deposits may relate to the number of independent pathologies with growth potential. Thus, many small calcifications may indicate many potential sources for progression.

In a preferred embodiment of the present invention, the annotations of the calcifications are used to calculate the following measures:

**Morphological Artherosclerotic Distribution (MAD) factor** - a measure of the total extent of the simulated atherosclerotic process divided by the area of the visible calcified plaques. The MAD factor provides a measure based on the area of all calcific deposits and takes into consideration the unseen molecular activity that precedes the formation of a calcification. The MAD factor therefore enables a measure that extends beyond the x-ray visible periphery of the calcification.

In summary, the total area of visible calcific deposits, i.e. the total area of calcification located within the respective annotated boundaries is calculated. The annotated boundary of each distinct calcific deposit is then expanded by a uniform amount and the total area of expanded calcific deposits, i.e. the total area of calcification located within the respective expanded annotated boundaries, calculated. The MAD factor is the result of the total expanded area of calcifications divided by the total area of visible (unexpanded) calcifications.

If points along the boundary of each calcific deposit are moved outwards from the centre of the calcific deposit by a distance x, the expanded boundaries of neighbouring calcific deposits or neighbouring portions of a particular calcific deposit that are within a distance x of each other will overlap. The MAD factor relates to the relative potential growth of the calcified plaque by counting only once overlapping expansions of two or more nearby calcific deposits. Likewise, expansion of the boundaries can be limited to expansion within the aortic walls. Therefore, if a calcific deposit is less than a distance x from an aortic wall, the boundary may only be expanded up to the aortic wall. This enables a measure to be derived that provides a realistic indication of the likely expansion of the calcific deposits.

Up to a certain threshold value, the MAD factor will in general be large when the individual areas are distributed over a large portion of the aorta. In this respect, relative proximity of the calcific deposits will only be considered if at least two of the calcific deposits are less than a distance x apart from each other. If the calcific deposits are all more than a distance x apart from each other, the expanded boundaries will not overlap.

The MAD factor also takes into account the morphology of individual calcific deposits. Specifically, as the shape of an individual calcific deposit deviates from being round, the percentage by which the calcified deposit will be expanded will be greater than for a rounder calcific deposit of the same area. Likewise, as the periphery of a calcific deposit becomes more irregular, the percentage by which the calcific deposit will expand will be greater than for a calcific deposit with a smoother periphery. Accordingly, a far stretched deposit yields a worse prognosis compared to a circular deposit of the same area.

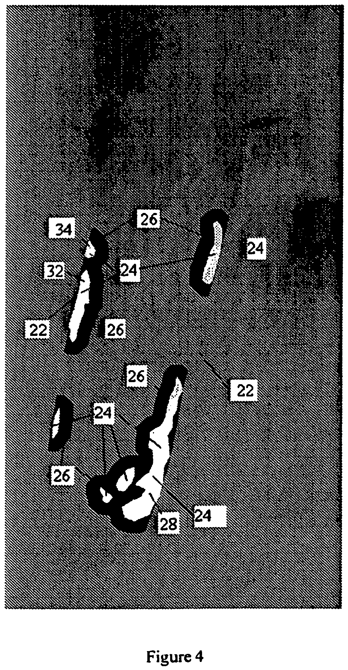

An example of an embodiment of the present invention illustrating the potential growth of areas of calcification is shown in Figure 4. The first step is to locate the aortic walls 22 and annotate the boundaries of each area of calcification 24. Figure 4 shows seven distinct areas of calcification 24. Points (not shown) along the respective boundary of each area of calcification are extended outwards in a direction substantially perpendicular to the tangent of each respective point. The points are moved a uniform distance away from the original boundary resulting in the expanded boundaries 26 shown in Figure 4.

Expansion of the respective boundaries is restricted by the aortic walls and by other neighbouring calcifications. For example, as shown in Figure 4, the boundary of a first calcification 28 is located in close proximity to an aortic wall 22. Accordingly, in that direction, the boundary is only expanded up to the aortic wall 22. Likewise, where calcifications 32, 34, are in close proximity to each other, the respective boundaries are only expanded up to the original unexpanded boundaries of the neighbouring calcifications and overlapping areas are only considered once.

In a specific embodiment a grass-fire equation implemented by iterated morphological dilations with a combined radius of 200 pixels corresponding to 8.9 mm in real size simulates the total extent of the atherosclerotic process. The boundaries may be expanded by the number of pixels that correspond to life-size distances of, for example, between 4mm and 20mm, or 7mm and 10mm. Typically, a healthy aorta has a diameter of approximately 20mm to 25mm. A diseased may have a diameter approximately 40mm to 50mm wider than a healthy aorta. Accordingly, boundaries of the calcifications may be expanded by approximately $\frac{1}{6}$ to $\frac{1}{2}$ of the diameter of the aorta. If the resolution of the image being analysed varies, the boundaries may be dilated by an appropriate number of pixels to correspond to an appropriate life-size expansion within the range specified above.

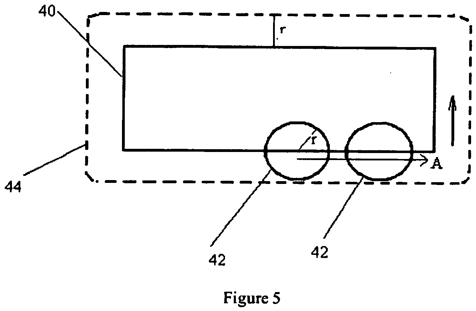

Figure 5 illustrates schematically dilation of a general shape 40. To dilate the shape 40, the centre of, for example, a circle 42 having radius r is rolled along the periphery of the shape 40 in a direction A. The dilated shape 44 is determined by the circumference of the circle 42 and its periphery is a distance r away from that of the original shape 40.

This method can be performed digitally on, for example, the areas of calcification 24 shown in Figure 4.

Alternatively, predicted growth of an area of calcification could be based on models of growth learned from previous examples of development of calcific deposits as set out by Kuhl, R Maas, G Himpel, A Menzel ("Computational modelling of artherosclerosis - A first approach towards a patient specific simulation based on computer topography", BMMB 6, 321-331, 2007).

**Morphological Atherosclerotic Calcification Distribution (MACD) index** - the morphological atherosclerotic distribution (MAD) factor weighted by the number of calcified deposits (NCD). The MACD index takes into account both the number of calcific deposits and their relative growth by multiplying the MAD factor by the number of calcified deposits. In isolation, the MAD factor does not account for multiple small calcific deposits that are spread out and where the expanded boundaries do not overlap. By including the number of calcific deposits in the calculation, an enhanced measure can be derived of the likely progression of calcification in a blood vessel and the associated risk of developing cardiovascular disease. In this respect, in biological terms, a greater number of small calcific deposits distributed over a large portion of a blood vessel indicates a greater risk of developing cardiovascular disease than fewer larger deposits over the same area.

**Moment of inertia** - the sum of an approximation of the amount of energy required to rotate each individual calcified pixel about a centre of mass. To calculate the moment of inertia it is first necessary to locate the overall centre of mass of the calcific deposits. The moment of inertia is equal to the sum of squared distances of each calcified pixel from the centre of mass. Accordingly, if a total of 100 calcified pixels are spread throughout an aorta in the form of many small calcified deposits, this will result in a higher moment of inertia than if the 100 calcified pixels form a single larger calcific deposit. The moment of inertia provides a measure of how spaced apart calcified pixels (and therefore calcified deposits) are, with little dependency on their shape.

To provide a more meaningful measure representative of the potential risk of progression of calcifications, the moment of inertia may be multiplied by a measure of the total area of calcific deposits or by the NCD.

**Convex hull** - the smallest convex set that contains all calcific deposits. The convex hull equates to the shortest path around the calcific deposits that encloses each of the calcific deposits. Calculating the perimeter of the convex hull or the area within the convex hull provides a measure of the spread of the calcific deposits. This value increases as the calcific deposits are more spread out. To obtain a more meaningful measure of the likely risk of developing cardiovascular disease, the convex hull may be multiplied by the number of calcific deposits or the total calcified area.

The convex hull of individual calcific deposits may also be calculated. The convex hull of an individual calcific deposit would equate to the shortest path around that calcific deposit and may therefore give some indication of the irregularity of individual calcific deposits. To provide a useful measure indicative of the aggregate deviation from roundness of calcific deposits, a measure may be derived of the sum of perimeters or areas representative of the convex hulls of individual calcific deposits divided by the total area of calcific deposits.

**Shape index** - a measure of the relationship between the perimeter and area of individual calcifications. In an embodiment, the aggregate shape index is derived by calculating the ratio of squared perimeter to area for each calcific deposit and summing the ratios:

$$Aggregate\_shape\_index = \sum_{n=1}^{n=n} \frac{p_n^2}{a_n}$$

Alternatively, in a preferred embodiment, the aggregate shape index of all calcifications is calculated as the ratio of the squared sum of perimeters of the calcific deposits to the total area:

$$Aggregate\_shape\_index = \frac{\left(\sum_{n=1}^{n=n} p_n\right)^2}{\sum_{n=1}^{n=n} a_n}$$

As the perimeter of each of the calcific deposits increases compared to the respective areas, the shape index will increase. Accordingly, the shape index increases as the individual calcifications deviate from being round and as the respective peripheries increase in irregularity.

**Fractal dimension** - provides a measure of whether or not a pattern is space filling. At coarser resolution, an indication of the spread of calcific deposits within an aorta is determined as the fractal dimension will increase as the calcific deposits are more spread out. Using the box counting method, if the grid is relatively large, a greater percentage of boxes of the grid will be occupied by at least some part of a calcific deposit if the calcific deposits are spread out.

At finer resolution, an indication of the irregularity of the periphery of individual calcifications can be determined and the fractal dimension will increase as the periphery of calcific deposits become more irregular. Using the box counting method, if the grid is relatively fine, a greater percentage of boxes of the grid will be occupied by at least some part of a calcific deposit if the periphery of the calcific deposit is irregular.

**Entropy** - a measure of the disorder of calcified pixels in an aorta. At a given resolution, say 4x4 pixel grid, the number of calcified pixels in every 4x4 square is calculated. Assuming each 4x4 tile is identified by I and has a number of calcified pixels n(i), the total number of calcified pixels will be N = sum_i n(i). The probability of a calcified pixel belonging to the ith tile will then be p(i) = n(i)/N. The entropy of this distribution will be H = sum_i - p(i) log p(i). If all calcific deposits fall within a few tiles it will be a low number. If the calcific deposits are more spread out, the number will increase.

**Quantification of distances between calcific deposits** - a measure of the spacing between individual calcific deposits. As an example, this could be measured by making a minimal spanning tree of all calcific deposits using the standard Euclidean distance between the closest points of two calcific deposits. The aggregate distance between closest points of respective calcific deposits can be used to determine the spread of the calcific deposits in the aorta.

Each of the measures described above may be used in isolation to provide a measure indicative of the severity of calcification in an aorta. To verify results, however, or to provide repeatable results, the different methods may be used in combination.

Scores obtained for the various measures as they are described above are expected to increase as stability of the calcifications decreases and therefore the risk of suffering an episode of CVD increases. However, it will be appreciated that similarly useful results may be obtained with different mathematical formulae to obtain a result that may decrease or behave in a different way as stability of the calcifications in an aorta decreases.

Using the information derived above, the inventors have investigated whether information (e.g. number, length, width, morphology and patterns) harvested from aortic calcifications by automated image analysis could facilitate the identification of postmenopausal women at increased risk of accelerated arteriosclerosis and related adverse outcomes. It was further investigated whether generalised risk assessment techniques such as the SCORE card or Framingham point score or individual risk factors such as cholesterol or triglycerides levels, would bring additional information to advanced image analysis or arteriosclerotic calcifications by x-ray, in terms of prediction of CVD related deaths.

The calcification of aortic plaque is the end stage of a long range of molecular events resulting in maturation into a calcified fibro-fatty plaque that includes but is not restricted to: inflammation, macrophage infiltration, foam cells generation, lipid accumulation and processing and smooth muscle cells apoptosis. This results in imparted collagen synthesis and vascular integrity, and later results in weakened fibrous cap and generates atherosclerotic plaques that are more prone to rupture. Importantly, the calcifications detected and analysed on x-rays are restricted only to the calcified core, and do not include the surrounding necrotic tissue and area of high remodelling and fibrosis. Thus the pathological area is underestimated by simple calcification measurements on x-rays.

Hence, as described above, in a preferred embodiment the present inventors use area enhancement by mathematical modelling and pattern recognition, in which particular consideration of the plaque morphology and biology may be given to enable a measure of relative risk using traditional atherosclerotic scoring by the Framingham system, using for example, number, length, width, morphology and patterns.

A specific study using the MAD factor and other measures is described below. The study population consisted of 308 women aged 48 to 76 years who previously participated in epidemiologic cohorts. The original population was recruited by questionnaire. These women were invited for a follow up visit in 2000-2001. Among those 8593 women invited for a revisit, 308 were randomly selected that all had an interval of 8-9 years since their first visit, were post menopausal, and had the lumbar aorta visible on a single radiograph in the examinations. Among these 308 women, 52 had died before the revisit. Of these 52, 20 died from CVD (38%), 27 died from cancer (52%) and 5 died from other causes (10%). Information of the 52 individuals who died in the observation period was obtained via the Central Registry of the Danish Ministry of Health with a follow up rate of 100%.

Demographic characteristics and risk parameters collected at baseline were age, weight, height, body mass index (BMI), waist and hip circumferences, systolic and diastolic blood pressure, treated hypertension, treated diabetes, smoking, regular alcohol and daily coffee consumption, and weekly fitness activity. Using a blood analyser, measurements of fasting glucose and lipid profile (total cholesterol, triglycerides, HDL0cholesterol (HDL0C), LDL-cholesterol (LDL-C), apolipoprotein (apoA and apoB) were obtained.

Lateral x-rays of the lumbar aorta (L1-L9) were recorded. The images were digitised using a Vidar Dosimetry Pro Advantage scanner providing an image resolution of 9651 times 4008 pixels on 12-bit gray scale using a pixel size of 44.6 $\mu$m squared. Trained radiologists annotated the digitised images on a Sectra radiological reading unit with annotation software written using the Matlab programming environment. The radiologists were instructed to annotate the 4 corner points and 2 mediolateral points used for vertebral height measurements on L1 to L4, then to delineate the aorta and finally to delineate every individual calcified deposit visible in the lumber aorta. The software used had the ability to edit annotations and to perform a digital zoom for precise annotation. Finally it was noted if the calcified deposit was associated to the anterior and/or posterior aorta wall.

Data presented is expressed as mean $\pm$ SEM unless otherwise indicated. For comparison purposes, groups are adjusted for age, waist and triglyceride concentration. Differences are tested by a two-sided heteroscedastic student's t-test. Differences were considered statistically significant if $p<0.05$.

The comparison of markers was performed by adjusting one marker for the influence of the other. When the adjusted marker may significantly ($p<0.05$) differentiate survivor group from deceased group the marker is assumed to carry additional information. Markers are compared by mutually adjusting for the other marker and testing for additional information as above. Markers are furthermore compared by odds-ratio of the 90% fractile using the Mantel-Haenszel 95% confidence interval (Mantel N, Haenszel "Statistical aspects of the analysis of data from retrospective studies of disease" J National Cancer Inst 1959; 22(4):710-748). Odds ratio differences are tested by Tarone's (Tarone RE "On heterogenenity tests based on efficient scores" Biometrika 1985; 72(1):91-95) adjustment of the Breslow-Day (Breslow NE, Day NE "Statistical methods in cancer research. Volume I - the analysis of case-control studies" IARC Sci Publications 1980;(32):5-338) test of heterogeneous odds ratio. Markers are combined linearly using Fisher's linear discriminant analysis (LDA). When combining LDA with fractile analysis, the LDA weights and fractile threshold are computed and evaluated in a leave-one-out fashion. Tests are considered statistically significant when p<0.05.

Among the physical and metabolic markers, separation of survivors and deceased was provided by most markers: Age (p<0.001), Waist/Hip ratio (p=0.005), Systolic BP (p<0.001), Glucose (p=0.03), Cholesterol (p=0.006), triglycerides (p<0.001), and ApoB/ApoA (p=0.003). After adjustment by age, waist circumference, and triglyceride concentration, no metabolic or physical marker showed any predictive value of all-cause mortality, as shown below.

|  | Population (n=308) | Survivors (n=256) | Deseased (n=52) | p-value | p-value Adjusted |
|---|---|---|---|---|---|
| Age (years) | 60.3±7.5 | 39.3±7.1 | 65.6±7.0 | <0.001 | - |
| Waist (cm) | 80.7±10.9 | 80.2±9.9 | 83.1±12.4 | 0.07 | - |
| Waist-to-hip ratio | 0.80±0.08 | 0.80±0.08 | 0.83±0.10 | 0.005 | - |
| BMI (kg/m$^2$) | 24.7±3.9 | 24.7±3.8 | 25.1±4.6 | 0.50 | 0.33 |
| Systolic BP (mm Hg) | 127±21 | 125±20 | 136±26 | <0,001 | 0.39 |
| Diastolic BP (mm Hg) | 77±10 | 76±10 | 77±11 | 0.52 | 0.87 |
| Hypertension % | 32 | 15 | 17 | 0.73 | 0.60 |
| Glucose (mmol/L) | 5.44±1.27 | 5.37±0.99 | 5.79±2.17 | 0.03 | 0.44 |
| Total cholesterol (mmol/L) | 6.44±1.19 | 6.36±1.14 | 6.85±1.33 | 0.006 | 0.96 |
| Triglyceride (mmol/L) | 1.24±0.75 | 1.15±0.56 | 1.69±1.25 | <0.001 | - |
| LDL-C /mmol/L) | 2.89±0.82 | 2.85±0.80 | 3.07±0.93 | 0.1 | 0.23 |
| HDL-C /mmol/L) | 1.77±0.48 | 1.77±0.44 | 1.74±0.62 | 0.67 | 0.24 |
| ApoB/ApoA | 0.57±0.18 | 0.56±0.17 | 0.64±0.23 | 0.003 | 0.59 |
| Lp(a) mg/dL | 21.4±21.7 | 21.9±22.0 | 18.4±19.8 | 0.32 | 0.08 |

The aortic calcification markers performed significantly better in all the stratified deceased groups (except the other-cause death group), and unlike the metabolic/physical, all the aortic calcification markers scored significantly higher in the deceased versus the survivors, even after adjustment by age, waist and triglycerides.

| Stratification/ Method | Survivors (n=256) | Deceased CVD (n=20) I | Deceased Cancer (n=27) | Deceased Other (n=5) | Deceased CVD/Cancer (n=47) | Deceased All cause (n=52) |
|---|---|---|---|---|---|---|
| AC24 | 1.35±0.15 | 3.50±0.12 (0.03) | 3.42±0.58 (0.004) | 1.22±0.98 (0.64) | 3.45±0.42 (0.002) | 3.23±0.40 (0.006) |
| Area% | 0.53±0.07 | 1.01±0.04 (0.60) | 1.58±0.36 (0.005) | 0.17±0.15 (0.30) | 1.34±0.22 (0.04) | 1.23±0.21 (0.04) |
| Thickness% | 8.9±1.2 | 16.9±0.8 (0.66) | 25.0±5.4 (0.01) | 2.8±2.6 (0.29) | 21.6±3.5 (0.03) | 19.8±3.3 (0.07) |
| Wall % | 0.79±0.10 | 2.08±0.09 (0.07) | 2.51±0.52 (0.004) | 0.60±0.55 (0.57) | 2.33±0.34 (0.002) | 2.16±0.32 (0.003) |

(continued)

| Stratification/ Method | Survivors (n=256) | Deceased CVD (n=20) I | Deceased Cancer (n=27) | Deceased Other (n=5) | Deceased CVD/Cancer (n=47) | Deceased All cause (n=52) |
|---|---|---|---|---|---|---|
| **Length%** | 6.0±0.7 | 15.3±0.6 (0.07) | 17.3±3.4 (0.001) | 4.8±4.4 (0.54) | 16.5±2.2 (0.002) | 15.4±2.1 (0.005) |
| **NCD** | 2.6±0.4 | 8.5±1.5 (0.04) | 11.6±2.6 (<0.001) | 3.0±2.8 (0.84) | 10.3±1.6 (<0.001) | 9.6±1.5 (<0.001) |
| **MAD factor** | 1.26±0.10 | 3.02±0.27 (0.002) | 2.25±0.28 (0.17) | 1.66±1.14 (0.78) | 2.58±0.20 (0.004) | 2.49±0.21 (0.004) |
| **MACD index** | 1.91±0.15 | 4.95±0.43 (<0.001) | 4.03±0.50 (0.01) | 2.34+1.61 (0.94) | 4.42±0.34 (<0.001) | 4.22±0.34 (<0.001) |

The differences were larger comparing survivors to CVD death only, although the significance was reduced as there were fewer patients. Thickness % and the Area % showed a non-significant difference (p=0.66, p=0.60) to the CVD group, but were both marginally significant in the combined CVD/cancer group (p=0.03, p=0.04).

The number of calcified deposits (NCD) provided the highest significance and predictive power among the single markers (p<0.001, CVD/cancer). The combined MACD index provided the highest significance (down to p=0.00000008 un-adjusted) for all groups of deceased (except for other-cause deaths).

After adjusting the AC24 for the influence of NCD, no significant difference was found between survivors and deceased (p=0.34). The NCD, however, still provided a significant difference (p=0.003) after adjusting for the AC24. The only markers that maintained significance after adjustment by the AC24 or NCD were the MAD factor (p=0.03 and p=0.01 respectively) and Area% (p=0.003 and p=0.02 respectively). The Area% lost significance after adjustment by both NCD and MAD factor (p=0.53).

The NCD marker and the combined MACD index exhibited had odds ratios of CVD/cancer mortality of 11.6 and 19.9 respectively. In comparison, the multivariate risk SCORE card and the Framingham point score yielded the statistically significant lower OR of 5.0 and 5.2, respectively. Combining the AC markers with metabolic/physical markers did not significantly improve the odds ratios as shown below. However, triglycerides generally improve all results but the MACD index.

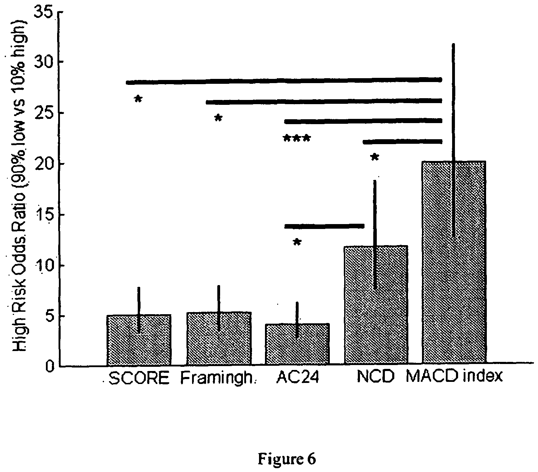

Figure 6 compares the markers, where the NCD exhibits a significantly higher odds ratio than the AC24 score (p=0.04). The MACD index was significantly higher than any other marker (SCORE p=0.02, Framingham p=0.02, AC24 p=0.0004, Area% p-0.009, Triglycerides p=0.009. Total cholesterol p=0.0002) except the NCD (p=0.37). Stratification into only CVD death yielded similar results with MACD index odds-ratio at 21, which was significantly higher than any other marker (SCORE OR 4.8m, p=0.04; Framingham OR 2.8, p=0.006; AC24 OR 3.1, p=0.007; Area% OR 2.4, p=0.004; Triglyceride OR 5.1, p=0.06; Total cholesterol OR 4.2, p=0.03).

The MACD index separated CVD death from survivors (area under ROC-curve 0.85) better than the metabolic physical markers (SCORE 0.80, Framingham 0.78, Triglyceride 0.68, Total cholesterol 0.76). Combination of the MACD index with any of the before mentioned scores resulted in an area under the ROC curve of up to 0.89 when combined with triglyceride concentrations, and hereby provided the largest improvement in the low risk range.

In general, all of the direct AC markers separated survivors from deceased. However, the number of calcified deposits, NCD, provided a superior separation being even more pronounced looking at the odds ratios. This may relate to the fact that even small calcific deposits may in due time develop into vulnerable atherosclerotic lesions. The MACD index, weighting of the NCD with the MAD factor, provided the best separation and highest odds ratios.

The morphological enlargement of plaque described above and used in the MAD factor and MACD index may extract information useful to stratify patients into groups of superior relative risk compared to the atherosclerotic scoring previously used.

In a further example of methods according to the invention we investigated associations of MACD and AC24 with traditional risk factors at baseline and after 8.3 years follow-up, to identify biological parameters that may account for the differential performance of these indices. Three hundred and eight women age 48 to 76 years, were followed for 8.3±0.3 years. AAC was quantified using lumbar radiographs. Baseline data included age, weight, blood pressure, blood lipids, and glucose levels. Pearson correlation coefficients were used to test for relationships.

At baseline and across all patients, MACD correlated with blood glucose (r2=0.1, P<0.001) and to a lesser extent with traditional risk factors (p<0.01). In longitudinal analysis of correlations of baseline biological parameters with follow-up calcification assessment we found that LDL-cholesterol, HDL/LDL, and the ApoB/ApoA ratio were significantly associated with the MACD (P<0.01). In a subset of patients presenting with calcification at both baseline and at follow-up, all cholesterol levels were significantly associated with the MACD (P<0.01) index. AC24 index was not correlated with these parameters.

In 1992-93, 686 postmenopausal women living in the Copenhagen area were recruited via questionnaire surveys to participate in a study addressing the role of a number of metabolic risk factors in the pathogenesis of CVD and osteoporosis. Follow-up was performed after $8.3\pm0.3$ years. Information of the 95 individuals who died in the observation period was obtained via the Central Registry of the Danish Ministry of Health with a follow-up rate of 100%. 129 women had relocated from the Copenhagen area or did not wish to participate in the follow up study and provided no clinical data at the end of the study. Baseline demographics and risk parameters were not different between these women and those completing the study.

Among the 462 women completing the follow-up visit, 256 (55%) had radiographs in which the lumbar aorta was visible. Furthermore, among the deceased, 52 (55%) had X-ray examinations where the full lumbar (L1-L4) aorta was visible on a single radiograph. Of these 52 deaths, 20 were related to CVD (38%), 27 were related to cancer (52%) and 5 were related to other causes (10%). The total number of patients included in the final data set is 308.

Demographic characteristics and risk parameters collected at baseline and follow-up were age, weight, height, Body Mass Index (BMI), waist and hip circumferences, systolic and diastolic blood pressure (BP), and smoking. Fasting plasma glucose and lipid profile: total cholesterol, triglycerides, LDL-cholesterol (LDL-C), HDL-cholesterol (HDL-C), apolipoprotein ratio (ApoB/ApoB) were obtained using a autoanalyzer (Cobas Mira Plus, Roche Diagnostics Systems, Hoffman-La Roche). Our newly developed aortic calcification index, MACD15 was quantified from outlines of the calcified aortic plaques on the X-rays from the lumbar aorta at baseline and compared to the aortic calcification severity score, AC24.

Lateral X-rays of the lumbar aorta (L1-L4) were recorded. The images were digitized using a Vidar Dosimetry Pro Advantage scanner providing an image resolution of 9651 by 4008 pixels on 12-bit gray scale using a pixel size of 44.6 $\mu$m2.

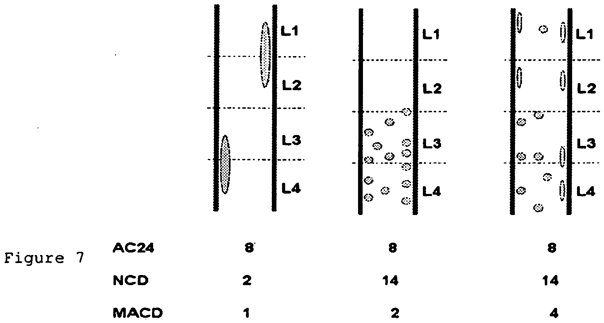

Trained radiologists annotated the digitized images on a Sectra radiological reading unit with annotation software implemented in Matlab (Mathworks, MA, USA). The radiologists were instructed to annotate the 6 points used for vertebral height measurements on L1 to L4, delineate the aorta, and outline every individual calcified deposit visible in the lumbar aorta and noting association to anterior and/or posterior walls. The software allowed editing and digital zoom. These annotations allow the automatic computation of the 0-24 aortic calcification (AC24) severity score; and an additional score, MACD, relating to the geometrical pattern of the calcified deposits in the following way: Number of Calcified Deposits (NCD): The number of distinct calcified deposits in the lumber region (L1-L4), as visualised in Figure 7.

MACD is given by the NCD * SimulatedArea/Calcified Area. The only free parameter is given in the Simulated-Area. The original area of the calcification is increased by a certain radius. The radius r of the increment was found to be 10 pixels after experiments with about 30 images, which are a subset of our population.

Statistical analysis - data are expressed as means t standard deviations unless otherwise indicated. Pearson correlations were used to assess associations between variables. Nonparametric (Mann-Whitney U) tests were used to obtain results in Table 1. Significance levels were set at a p-value of 0.05.

RESULTS

Baseline characteristics of biochemical parameters for the 308 women who participated in this study are shown in Table 1.

Table 1. Characteristics of the study population stratified into whole population, healthy (H) at baseline, with no calcifications identified, and population with calcifications (C) at baseline.

|  | Population (n=308) | H (n=165) | C (n=143) |
|---|---|---|---|
| Age (years) | $60.3\pm7.5$ | $57.8\pm6.8$ | $63.3\pm7.1$ ** |
| BMI (kg/m$^2$) | $24.7\pm3.9$ | $25,1+3.8$ | $24.3\pm4.0$ |
| Systolic BP (mm Hg) | $127\pm21$ | $122\pm19$ | $133\pm23$ ** |
| Diastolic BP (mm Hg) | $77\pm10$ | $76\pm10$ | $77\pm10$ |
| Hypertension | 48 | 16 | 32 |
| Glucose (mmol/L) | $4.74\pm1.10$ | $4.59\pm0.56$ | $4.92\pm1.44$ * |
| Total-C. (mmol/L) | $6.33\pm1.19$ | $6.11\pm1.00$ | $6.58\pm1.27$ ** |
| Triglyceride (mmol/L) | $1.24\pm0.75$ | $1.20\pm0.69$ | $1.41\pm0.81$ * |
| LDL-C /mmol/L) | $2.89\pm0.82$ | $2.71\pm0.69$ | $3.09\pm0.91$ ** |
| HDL-C /mmol/L) | $1.37\pm0.36$ | $1.38\pm0.34$ | $1.35\pm0.39$ |
| ApoB/ApoA | $0.57\pm0.18$ | $0.53\pm0.15$ | $0.61\pm0.20$ ** |

(continued)

|  | Population (n=308) | H (n=165) | C (n=143) |
|---|---|---|---|
| LDL/HDL (mmol/L) | 2,32±1,08 | 2,14±0,92 | 2,53±1,21 |

The mean age of total population at baseline was approximately 60 years, with individuals with AACs at baseline having a significantly higher average age. There was a significant difference in systolic blood pressure, total cholesterol, LDL cholesterol, ApoB/ApoA, triglycerides, glucose, and BMI between the subgroup of patients (n=165) with no calcifications at baseline, and the subgroup of patients (n=143) presenting with aortic calcifications at baseline.

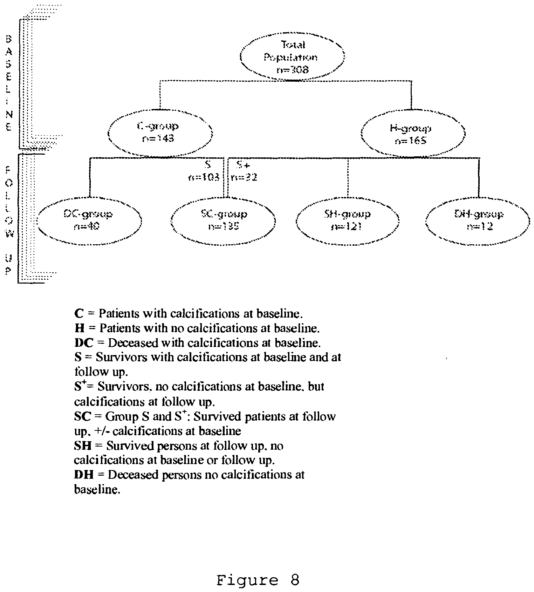

Figure 8 illustrates the population subgroups at baseline and follow-up visits.

Cross-sectional analysis

The MACD index was compared to AC24 score with the respect to their cross-sectional correlations to different biological parameters. Correlations for the sub-population C containing only patients with established lumbar aortic calcifications at baseline are presented in Table 2.

Table 2. Cross-sectional analysis. Correlations of different biological risk factors with age adjusted MACD and AC24. a) Cross-sectional correlation performed on baseline biochemistry and baseline X-rays. b) Cross-sectional correlation performed on follow-up biochemistry and follow-up X-rays.

| a) | MACD Group C | AC24 Group C | b) | FU-MACD Group SC | FU-AC24 Group SC |
|---|---|---|---|---|---|
| Age | - | - | Age | - | - |
| Triglyceride | 0.35*** | 0.13 | Triglyceride | 0.09 | -0.05 |
| BMI | 0.05 | -0.07 | BMI | -0.07 | -0.06 |
| Systolic BP | 0.11 | 0.16(*) | Systolic BP | 0.01 | 0.11 |
| Diastolic BP | -0.07 | 0.01 | Diastolic BP | -0.05 | 0.08 |
| Total-C | 0.07 | 0.03 | Total-C | -0.06 | -0.08 |
| Glucose | 0.30*** | 0.05 | Glucose | 0.18* | 0.19* |
| LDL-C | 0.13 | 0.11 | LDL-C | 0.02 | -0.12 |
| HDL-C | -0.19* | -0.17* | HDL-C | -0.13 | 0.04 |
| LDL-C/HDL-C | 0.23** | 0.18* | LDL/HDL | 0.16(*) | -0.08 |
| Apo B/Apo A | 0.29*** | 0.23** | Apo B/Apo A | 0.15 | -0.03 |

* p < 0.05; ** p < 0.01; *** p < 0.001; (*)borderline significant

Baseline MACD index was significantly positively correlated with baseline blood glucose levels and triglycerides, whereas the AC24 score was not (Table 2.a). Both MACD and AC24 correlate positively with the traditional risk factors ApoB/ApoA, and LDL/HDL ratio and negatively with HDL-cholesterol. In the cross-sectional follow-up analysis (Table 2. b) differences between calculated MACD index and AC24 score were abolished. Interestingly, for both indexes calculated at follow-up there was a significant correlation to plasma glucose levels. No significant correlations were observed for the cholesterol levels.

Longitudinal analysis - Progression of disease and initiation of disease was analyzed.

The number of new calcified deposits (ND) in the lumbar aorta was correlated to a number of biological risk factors (Table 3).

Table 3. Number of new calcified deposits (NCD) for the SC, S and S+ groups correlated to the biological risk factors.

|  | FU-NCD SC | FU-NCD S | FUNCD S+ |
|---|---|---|---|
| Age | - | - | - |
| Triglyceride | 0.18* | 0.22* | -0.03 |

(continued)

| | FU-NCD SC | FU-NCD S | FUNCD S+ |
|---|---|---|---|
| BMI | -0.09 | -0.03 | -0.26 |
| Systolic BP | 0.17 | 0.13 | -0.13 |
| Diastolic BP | -0.04 | -0.08 | -0.03 |
| Total-C | 0.13 | 0.13 | 0.12 |
| Glucose | 0.15 | 0.15 | -0.22 |
| LDL-C | 0.22* | 0.25* | -0.13 |
| HDL-C | -0.09 | -0.16 | 0.30 |
| Apo B/Apo A | 0.26** | 0.32** | -0.19 |
| LDL-C/HDL-C | 0.22* | 0.28** | -0.27 |

* p < 0.05; ** p < 0,01; *** p < 0.001; (*) borderline significant

Relationship between follow-up values of MACD and AC24 and baseline biochemical parameters is shown in Table 4.

Table 4. Longitudinal analysis SC, S and S+ groups. Correlation of follow up MACD and AC24 to biological risk factors.

| | FU-MACD Group SC | FU-AC24 Group SC | FU-MACD Group S | FU-AC24 Group S | FU-MACD Group S+ | FU-AC24 Group S+ |
|---|---|---|---|---|---|---|
| Age | - | - | - | - | - | - |
| Triglyceride | 0.13 | 0.03 | 0.15 | 0.01 | 0.03 | 0.22 |
| BMI | -0.05 | -0.05 | -0.01 | -0.02 | -0.25 | 0.08 |
| Systolic BP | 0.18* | 0.27** | 0.17 | 0.22* | -0.28 | 0.15 |
| Diastolic BP | -0.02 | 0.04 | -0.05 | -0.02 | -0.11 | 0.14 |
| Total-C | 0.17(*) | 0.04 | 0.20* | 0.02 | -0.12 | 0.18 |
| Glucose | 0.05 | 0.09 | 0.04 | 0.06 | -0.27 | 0.10 |
| LDL-C | 0.24** | 0.11 | 0.29** | 0.12 | -0.21 | 0.03 |
| HDL-C | -0.05 | -0.07 | -0.09 | -0.11 | 0.23 | 0.06 |
| Apo B/Apo A | 0.26** | 0.13 | 0.31** | 0.15 | -0.18 | 0.02 |
| LDL/HDL | 0.19* | 0.15 | 0.24* | 0.17 | -0.28 | 0.07 |

* p < 0.05; ** p < 0.01; *** p < 0.001; (*) borderline significant

Initially, across all survivors irrespective of disease extent at baseline (SC group), there was a strong correlation of NCDs to LDL-C, ApoB/ApoA ratio, LDL/HDL ratio, and triglycerides, proving these parameters of significant importance in development of new calcified deposits over time, irrespectively of disease status. In this analysis, no significant correlation was found for plasma glucose levels. Interestingly, with the respect to initiation of the disease (S+) none of the parameters, except for the borderline significant triglyceride correlations, were shown to correlate with NCD.

We found the total cholesterol, LDL-cholesterol, and the ApoB/ApoA ratio were associated with disease progression in patients presenting with aortic calcifications at baseline.

Table 4 shows the correlation of follow up (FU) MACD and AC24 to the different biological parameters.

Among all patients progressing in the disease irrespectively of disease status the (SC group (n=135)) FU-MACD correlated significantly with blood lipids, including - ApoB/ApoA, LDL-cholesterol, and LDL/HDL ratio, whereas AC24 did not correlate with any of the lipid parameters. Both FU-MACD and FU-AC24 were correlated significantly with systolic blood pressure.

Among patients with disease progression (group S (n=103)) the FU-MACD was correlated with total cholesterol, LDL-cholesterol, LDL/HDL ratio, and ApoB/ApoA, whereas FU-AC24 was not. Both FU-MACD and FU-AC24 correlated well with the systolic blood pressure.

Assessment of indices which might be associated with initiation of aortic calcification (group S+, the group with no calcification at baseline (n=32)) indicated that either the MACD index or AC-24 did not correlate significantly with any of the biological parameters at follow-up.

The main findings in the cross-sectional study were the highly significant correlation of MACD index to glucose and triglyceride levels (p<0.01) compared to that of the AC24 score that did not display any correlation to the two parameters. Both scores were comparable when correlated to the rest of the traditional risk factors such as LDL, HDL, LDL/HDL ratio, and ApoB/A ratio. Furthermore, cross-sectional analysis of the follow-up data, suggested the loss of significant correlations to the cholesterol levels for both MACD index and AC24 score, but both displayed significant correlation to the plasma glucose levels, emphasizing the importance of glucose for disease progression. The data from the cross-sectional part of the study suggests that an index based on plaque distribution and morphology, such as MACD index, contains additional information, in terms of its dynamic sensitivity to traditional risk factors. The longitudinal analysis was performed in order to assess if there were differences in biological profiles of patients with and without CVD at baseline in relation to the MACD index and AC24 score. There was a large difference in the significance of biochemical factors in the groups with and without calcification at baseline. When analyzing the group of patients with the increased number of calcifications in their lumbar aorta from baseline to follow up (Group SC n=135), we found that the MACD index was highly associated with biochemical parameters such as total cholesterol (borderline), LDL, LDL/HDL ratio, and ApoB/A ratio, compared to the AC24 score. The AC24 score only correlated with systolic blood pressure, indicating that the MACD is a more sensitive index, when evaluating the CVD risk in patients already affected with calcified plaques. Surprisingly, this picture changes when examining the group of patients with detectable calcifications at follow-up but not at baseline (S+ group n=32). This group of patients was used under the current analysis to investigate the early stages in initiation of calcification. Neither the MACD nor the AC24 score displayed any significant correlation to the biochemical parameters investigated. An obvious caveat is the smaller number of patients (n= 32) in this sub-group compared to the patients progressing in the disease (n=103).

MACD index vs. AC24 score

The observed differences in the MACD and AC24 in correlation to biochemical factors in the examined sub-groups may be explained by the differences in the scoring technique. As visualized in Figure 1, there are important differences between the AC24 and MACD indexes. The MACD score gives equal importance to newly formed calcium deposits, whereas only those deposits that are separated and positioned in non-scored areas are included in the AC24 index. Thereby the MACD is influenced to a greater degree by an increased number of calcified plaques. In addition, the MACD index favours smaller plaques compared to larger plaques for their potential to grow. This is done by dividing the simulated plaque area estimating the total atherosclerotic area from the visualized calcified core by the actual calcified core area. These subtle although important differences in the two indexes may have significant biological implications, for factors initiating and/or driving the disease.

The MACD index may have different distribution of plaque number and morphologies that result in the same score. For example, many smaller plaques would have a higher score compared to an equal area of large plaques. Thereby the same amounts of calcification assessed by the MACD score may change significantly over time, both resulting in lower and higher risk. Thereby the MACD index may be a more dynamic assessment of score and thereby risk. In support of this, recent investigation suggests that calcium content of the plaque may be proportional to the risk of rupture until a certain point, at which the evolving plaque becomes a more stable plaque. This biological feature is accounted for in the modulation of the potential to grow of smaller plaques.

Plasma Glucose and CVD-risk

One of our main findings at baseline demonstrated a strong correlation of high plasma glucose levels with MACD but not the AC24 index. This picture changed in the follow-up cross-sectional analysis, where both MACD index and AC24 score exhibited strong correlation to glucose levels. This suggests that a strong predisposing role of glucose in atherogenesis. Diabetes is now generally considered being one of the major risk factors of atherosclerosis, with the hyperglycaemia as an underlying contributing factor. Patients with diabetes have been found to present with distinct calcifications of the medial part of the arteries often referred to as Monckenberg's medial sclerosis, which is associated with vascular stiffening and atherosclerosis. Intimal calcifications may occur independently of medial calcifications and vice versa. In diabetic patients, medial calcification seems to be a strong independent predictor of cardiovascular mortality and occurs particularly in patients with nephropathy. However, mechanisms that mediate vascular complications following hyperglycemia are not yet fully understood.

Blood-lipids and CVD-risk

Our second major cross-sectional finding demonstrates that plasma triglyceride levels correlated with the MACD index in the baseline cross-sectional study, adding to the body of evidence that triglycerides are of considerable importance in atherogenesis.

Elevated serum triglycerides in the high-risk patients and the role of hypertriglyceridemia as causality of coronary artery disease remain to be elucidated. Nonetheless, there is growing evidence that hypertriglyceridemia is a marker for increased risk for coronary artery disease. Our data further support this notion, both in the cross-sectional and the longitudinal part of the study. Importantly, the triglycerides correlate significantly the MACD-index, but not AC24, emphasizing the importance and differences of this new scoring method.

Endothelial dysfunction and reduced compliance of large blood vessels have been recognized as early clinical manifestations of atherosclerosis. In healthy women with one or none risk factors, it was reported that plasma triglyceride was the most powerful predictor of large vessel compliance. Patients with elevated triglycerides have often a specific profile consisting of obesity, high insulin and elevated plasma glucose levels - know as the metabolic syndrome.

The Framingham Heart Study reported strong correlation of triglycerides with relative risk for CHD. New results from the Framingham Heart Study have suggested that independent of gender high triglyceride levels (> 1.7 mmol/liter) and a low high-density lipoprotein (HDL) level (< 1.03 mmol/liter) constitutes a phenotype associated with significantly higher rate of coronary artery disease. This combination of high triglyceride and low HDL is associated with the metabolic syndrome, and because total cholesterol in these populations may be less than or just slightly greater than 5.2 mmol/ liter, they are missed by some cholesterol screening programs.

The significance of triglycerides is further emphasized by an angiographic study in women, where it was reported that patients with significant CAD, defined as presence of stenosis larger than 60% in one or more coronary arteries, had higher LDL- cholesterol, triglycerides and lower HDL cholesterol than women without diagnosed CAD. Meta-analysis consolidating data from 17 different studies containing 47000 men and 11000 women, lead to the conclusion that an increment in triglycerides of 88 mg/dL (1 mmol/L) increased the relative risk for CAD by 32% in men and 76% in women.

We should also emphasize, that the observed strong baseline correlation of blood lipids, disappeared in the follow-up cross-sectional study. We have previously shown that the high-risk group of patients in our cohort presented with OR of approximately 20, according to the MACD index. The explanation for the slightly improved blood-lipid picture at follow-up, could partly be due to the death of some of the patients in this group during the 7,5 years between baseline and follow-up visit. Furthermore, as the age in the population increases, the treatments in form of blood-lipid lowering medication increases in our population, which could contribute to the understanding of the sudden lack of significant correlations of both the MACD index and the AC24 score to blood lipids. We do not have information on the number of patients receiving lipid-lowering medication in our study population.

The importance of vascular calcium in atherogenesis

The importance of coronary calcium for risk of plaque rupture and the development of atherosclerosis has been investigated and discussed extensively. A positive correlation of coronary artery calcification and atherosclerotic plaque burden as well as with increased risk of plaque rupture and myocardial infarction have been demonstrated. These studies and others suggest that the extent of coronary calcium is directly associated with the severity of atherosclerosis and likelihood of a clinical event. On the other hand, patients with no detectable coronary calcium have a relatively low risk for cardiovascular events. Controversy exists on the prognostic significance of coronary artery calcium content. Coronary calcification is more highly associated with chronic symptomatic coronary heart disease (CHD) rather than with acute coronary events attributed to the plaque rupture. This is supported by intravascular ultrasound studies, which have shown less extensive coronary calcifications in patients with acute coronary syndromes compared with patients with stable angina. Furthermore, in patients presenting with acute coronary syndromes, intravascular ultrasound showed less calcification in event-related coronary lesion than in stable plaques. These findings have been interpreted by some as evidence that vascular calcification may be protective against acute events, but its effects on plaque stability are still unclear.

To further complicate the picture of the biological role and risk of calcification, plaque rupture may under some circumstances not be associated with plaque volume or mass, however, plaque structure and composition appears to be a major determinant of the predisposition of a plaque to rupture. Analyses of ruptured plaques have revealed a tendency to contain high lipid and macrophage infiltrations and less collagen, smooth muscle cells and calcium than non-ruptured plaques. The extent to which vascular calcification contributes to the initiation or progression of the CVD is of interest in the present context. The emerging picture of coronary calcification is that of a complex process influenced by a variety of variables, which in some cases has similarities to bone formation.

In conclusion, we have demonstrated that a refined index of arterial aortic calcification, MACD, may contain additional and important information on risk related to cardiovascular mortality compared to the traditional AC24 index. This index correlated significantly to emerging risk factors in atherosclerosis such as sub-clinical levels of hyperglycaemia. In the present studies, each index provided important information. However, whereas the MACD index correlated to both initiation and progression of disease, the AC24 performed optimally in relation to initiation of disease.

The technique described herein is semi-automatic. However, it will be appreciated that the calcific deposit analysis could be fully automated. Specifically, it is possible that the system may be fully automated by using a particle filtering technique in combination with statistical pixel classification to identify and classify the areas of calcification.

In this specification, unless expressly otherwise indicated, the word 'or' is used in the sense of an operator that returns a true value when either or both of the stated conditions is met, as opposed to the operator 'exclusive or' which requires that only one of the conditions is met. The word 'comprising' is used in the sense of 'including' rather than in to mean 'consisting of'.

**Claims**

1. A computer-implemented method of processing an image of at least part of a blood vessel to derive a measure indicative of the instability of calcific deposits in the blood vessel, said blood vessel containing at least one calcific deposit, which method comprises:

   locating and annotating one or more calcific deposits;
   using information derived from the annotation of said calcific deposits to calculate a measure reflecting a combination of a) the aggregate of the deviations from roundness of individual calcific deposits, and b) up to at least a threshold value, the extent to which the separate calcific deposits are spaced from one another , wherein locating and annotating the one or more calcific deposits comprises locating and annotating the boundary of each said calcific deposit and calculating a measure reflecting a combination of a) and b) is obtained by:
   calculating the area occupied by the calcific deposits;
   expanding the boundary of each said calcific deposit outwards by a distance x corresponding to between 4mm and 20mm of a life-size image;
   calculating the area occupied by the expanded calcific deposits; and
   calculating a comparative index by comparing the area of expanded calcific deposits with the area of unexpanded calcific deposits to derive said measure.

2. A method as claimed in claim 1, wherein the step of expanding the boundary of each said calcific deposit outwards comprises dilating the boundary of each calcific deposit.

3. A method as claimed in claim 2, further comprising dilating the boundary of each said calcific deposit using a circle of radius x.

4. A method as claimed in claim 1, further comprising counting the number of calcific deposits and weighting said comparative index by said number.

5. A method as claimed in any preceding claim, wherein the blood vessel is an artery.

6. A method as claimed in claim 5, wherein the blood vessel is an aorta.

**Patentansprüche**

1. Computer-implementiertes Verfahren zum Verarbeiten eines Bildes zumindest eines Teils eines Blutgefäßes, um ein für die Instabilität von Kalkablagerungen in dem Blutgefäß kennzeichnendes Maß herzuleiten, wobei das Blutgefäß zumindest eine Kalkablagerung aufweist, und wobei das Verfahren umfasst:

   - das Lokalisieren und Annotieren einer oder mehrerer Kalkablagerung(en);
   - das Verwenden der durch die Annotierung der Kalkablagerungen hergeleiteten Informationen zum Berechnen eines Maßes, das eine Kombination widerspiegelt: aus a) den Abweichungen der einzelnen Kalkablagerungen insgesamt von einem runden Erscheinungsbild *[engl.: roundness]* und b) bis hin zu zumindestens einem Schwellenwert, bis zu dem die einzelnen Kalkablagerungen voneinander beabstandet sind; wobei das Lokalisieren und Annotieren der Kalkablagerung(en) das Lokalisieren und Annotieren der Grenze einer jeden Kalkablagerung umfasst und das Berechnen eines Maßes, das eine Kombination aus a) und b) widerspiegelt, erhalten wird durch:
   - das Berechnen des von den Kalkablagerungen eingenommenen Bereichs;
   - das Nachaußenaufweiten der Grenze jeder Kalkablagerung um eine Entfernung x, die zwischen 4mm und 20mm eines lebensgroßen Bildes entspricht;
   - das Berechnen des von den aufgeweiteten Kalkablagerungen eingenommenen Bereichs; und
   - das Berechnen eines Vergleichsindexes durch Vergleichen des Bereichs der aufgeweiteten Kalkablagerungen mit dem Bereich der nichtaufgeweiteten Kalkablagerungen, um das Ausmaß herzuleiten.

**2.** Verfahren nach Anspruch 1, bei dem der Schritt des Nachaußenaufweitens der Grenze jeder Kalkablagerung das Dilatieren der Grenze jeder Kalkablagerung umfasst.

**3.** Verfahren nach Anspruch 2, weiterhin umfassend:

das Dilatieren der Grenze jeder Kalkablagerung unter Verwendung eines Kreisradius x.

**4.** Verfahren nach Anspruch 1, weiterhin umfassend:

das Zählen der Anzahl der Kalkablagerungen und Gewichten des Vergleichsindexes anhand dieser Anzahl.

**5.** Verfahren nach einem der vorherigen Ansprüche, bei dem das Blutgefäß eine Arterie ist.

**6.** Verfahren nach Anspruch 5, bei dem das Blutgefäß eine Aorta ist.


**Revendications**

**1.** Procédé mis en oeuvre par ordinateur de traitement d'une image d'au moins une partie d'un vaisseau sanguin pour obtenir une mesure indicative de l'instabilité des dépôts calciques dans le vaisseau sanguin, ledit vaisseau sanguin contenant au moins un dépôt calcique, lequel procédé comprend des étapes pour :

localiser et annoter un ou plusieurs dépôts calciques ;
utiliser des informations obtenues à partir de l'annotation desdits dépôts calciques pour calculer une mesure reflétant une combinaison de a) la somme des déviations par rapport à l'arrondi des dépôts calciques individuels, et b) jusqu'à au moins une valeur de seuil, la mesure dans laquelle les dépôts calciques séparés sont espacés les uns des autres, la localisation et l'annotation du ou des dépôts calciques consistant à localiser et annoter le contour de chacun desdits dépôts calciques et le calcul d'une mesure reflétant une combinaison de a) et b) est obtent :

en calculant la surface occupée par les dépôts calciques ;
en élargissant le contour de chacun desdits dépôts calcique vers l'extérieur d'une distance x correspondant à une longueur comprise entre 4 mm et 20 mm d'une image grandeur nature ;
en calculant la surface occupée par les dépôts calciques élargis ; et
en calculant un indice comparatif en comparant la surface des dépôts calciques élargis à la surface des dépôts calciques non élargis pour obtenir ladite mesure.

**2.** Procédé selon la revendication 1, dans lequel l'étape d'élargissement du contour de chacun desdits dépôts calciques vers l'extérieur consiste à dilater le contour de chaque dépôt calcique.

**3.** Procédé selon la revendication 2, consistant en outre à dilater le contour de chacun desdits dépôts calciques en utilisant un cercle de rayon x.

**4.** Procédé selon la revendication 1, consistant en outre à compter le nombre de dépôts calciques et à pondérer ledit indice comparatif par ledit nombre.

**5.** Procédé selon l'une quelconque des revendications précédentes, dans lequel le vaisseau sanguin est une artère.

**6.** Procédé selon la revendication 5, dans lequel le vaisseau sanguin est une aorte.

Figure 1

Figure 2

Figure 3

Figure 4

Figure 5

Figure 6

| Figure 7 | AC24 | 8 | 8 | 8 |
| --- | --- | --- | --- | --- |
| | NCD | 2 | 14 | 14 |
| | MACD | 1 | 2 | 4 |

C = Patients with calcifications at baseline.

H = Patients with no calcifications at baseline.

DC = Deceased with calcifications at baseline.

S = Survivors with calcifications at baseline and at follow up.

$S^+$= Survivors, no calcifications at baseline, but calcifications at follow up.

SC = Group S and $S^+$: Survived patients at follow up, +/- calcifications at baseline

SH = Survived persons at follow up, no calcifications at baseline or follow up.

DH = Deceased persons no calcifications at baseline.

Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LAUZE F et al.** Towards automated detection and segmentation of aortic calcifications from radiographs. *proc of SPIE medical imaging,* 2007, 6512
- Quantifying calcification in the lumbar aorta on x-ray images. **CONRAD-HANSEN et al.** Medical Image Computing & Computer-Assisted Intervention. Springer, 2007, vol. 4792, 352-359
- **BRUIJNE.** Shape particle guided tissue classification. *Mathematical Methods in Biomedical Image Analysis,* 2006
- **CONRAD-HANSEN et al.** A pixelwise inpainting-based refinement scheme for quantizing calcification in the lumbar aorta on 2D lateral x-ray images. *SPIE Medical Imaging - Image Processing,* 2006

- **KUHL, R MAAS ; G HIMPEL ; A MENZEL.** Computational modelling of artherosclerosis - A first approach towards a patient specific simulation based on computer topography. *BMMB,* 2007, vol. 6, 321-331
- **MANTEL N, HAENSZEL.** Statistical aspects of the analysis of data from retrospective studies of disease. *J National Cancer Inst,* 1959, vol. 22 (4), 710-748
- **TARONE RE.** On heterogenenity tests based on efficient scores. *Biometrika,* 1985, vol. 72 (1), 91-95
- **BRESLOW NE ; DAY NE.** Statistical methods in cancer research. Volume I - the analysis of case-control studies. IARC Sci Publications, 1980, 5-338